# EUROPÄISCHE PATENTSCHRIFT

(11) **EP 2 691 735 B1**
(45) Veröffentlichungstag und Bekanntmachung des Hinweises auf die Patenterteilung: **22.04.2020**
(21) Anmeldenummer: 12701845.5
(22) Anmeldetag: 12.01.2012
(51) Int. Cl.: G01B 11/275, G01B 21/04

(54) **SYSTEM UND VERFAHREN ZUM KALIBRIEREN EINES REFERENZSYSTEMS ZUR FAHRZEUGVERMESSUNG**
SYSTEM AND METHOD FOR CALIBRATING A VEHICLE MEASUREMENT REFERENCE SYSTEM
SYSTÈME ET PROCÉDÉ POUR LE CALIBRAGE D'UN SYSTÈME DE RÉFÉRENCE POUR LA MESURE DE VÉHICULES

(30) Priorität: 29.03.2011 DE 102011006328; 12.01.2012 DE 102012200415
(43) Veröffentlichungstag der Anmeldung: 05.02.2014
(73) Patentinhaber: Beissbarth GmbH, 80993 München (DE)
(72) Erfinder: BACKES, Jochen, 80687 Muenchen (DE); HODISSEN, Sven, 80637 Muenchen (DE); UFFENKAMP, Volker, 71642 Ludwigsburg (DE); WAGMANN, Christian, 80538 Muenchen (DE); PUCNIK, Darko, 85774 Unterfoehring (DE)
(74) Vertreter: Schmitt-Nilson Schraud Waibel Wohlfrom Patentanwälte Partnerschaft mbB
(86) Internationale Anmeldenummer: PCT/EP2012/050445
(87) Internationale Veröffentlichungsnummer: WO 2012/130484

(56) Entgegenhaltungen:
- WO-A1-03/044458
- WO-A1-2005/108020
- WO-A2-2005/124276
- US-A- 5 748 505
- US-A1- 2006 152 711

## Beschreibung

Die Erfindung betrifft ein System und ein Verfahren zum Kalibrieren eines Referenzsystems, wie es bei der Fahrzeugvermessung eingesetzt wird.

### Stand der Technik

Aus WO 2010/028946 A1 ist eine Einrichtung zur Fahrzeugvermessung für ein auf einem Messplatz stehendes Fahrzeug mit zwei Messeinheiten bekannt, wobei jede der beiden Messeinheiten ein Referenzsystem aufweist. Die Referenzsysteme sind jeweils ausgebildet, um die horizontale und vertikale Lage der jeweiligen Messeinheit und die Winkel der Messeinheiten zueinander zu bestimmen.

Um bei der Fahrzeugvermessung genaue Ergebnisse zu erhalten, müssen die Referenzsysteme vor der Durchführung der Messungen kalibriert werden.

Aus DE 10 2010 039 246 sind ein Verfahren und eine Vorrichtung zur Kalibrierung von zwei Referenzsystemen in einem gemeinsamen Messplatzkoordinatensystem bekannt. Die Kalibrierung ist auf zwei Referenzsysteme ausgelegt, da zwei einander gegenüberliegend angeordnete Referenzsysteme eine gegenseitige Referenzierung ermöglichen.

### Offenbarung der Erfindung

Es ist eine Aufgabe der Erfindung, eine Vorrichtung und ein Verfahren bereitzustellen, die es ermöglichen, ein einzelnes Referenzsystem zu kalibrieren.

Diese Aufgabe wird durch ein Messplatzsystem nach dem unabhängigen Patentanspruch 1 und ein Verfahren zum Kalibrieren eines Referenzsystems nach dem Patentanspruch 7 gelöst. Die abhängigen Patentansprüche beschreiben vorteilhafte Ausgestaltungen eines erfindungsgemäßen Messplatzsystems bzw. eines erfindungsgemäßen Verfahrens.

WO 2005/108020 A1 offenbart eine optische Messanordnung zur Verwendung an einem mehrachsigen Manipulator, insbesondere einem Industrieroboter, mit einem an dem Manipulator montierbaren Abstandshalter, an dem ein optischer Sensor befestigt ist. Auf dem Abstandshalter und/oder auf einem Gehäuse des Sensors sind Messmarken vorgesehen, die es ermöglichen, die Position des Sensors im Raum zu bestimmen. Eine Hilfsvorrichtung zum Einmessen der Messanordnung hat Messmarken, die es ermöglichen, die Position der Hilfsvorrichtung im Raum zu bestimmen, einen Befestigungsbereich zur Fixierung der Hilfsvorrichtung an der optischen Messanordnung und ein Sensortarget, das so auf der Hilfsvorrichtung angeordnet ist, dass es in Zusammenbaulage der Hilfsvorrichtung mit der optischen Messanordnung in einem Messraum des optischen Sensors liegt.

US 5,748,505 offenbart eine Sensoranordnung, die vorgesehen ist, um ein Referenzsystem gegenüber einem externen Referenzsystem, das durch lichtabgebende Referenzmarken definiert wird, zu kalibrieren. Die Sensoranordnung umfasst ein weites Kalibrationsfeld und liefert Daten, welche die räumlichen Positionen von Lichtquellen innerhalb des Kalibrationsfelds bezeichnen. Ein als Tetraeder ausgebildeter Rahmen, der an seinen Ecken mit LEDs versehen ist, dient als mobile Referenzmarke, die vor dem zu kalibrierenden Sensor platziert wird. Die Sensoranordnung umfasst und kalibriert die Positionen der LEDs an den Ecken, während das Lichtmuster eines Merkmalssensors auf den Rahmen der Referenzmarke projiziert wird. Das Lichtmuster wird von der Referenzmarke reflektiert und versorgt den Merkmalssensor mit Informationen über die Position und Ausrichtung der Referenzmarke. Diese Daten werden benutzt, um das Koordinatensystem des Merkmalssensors in Bezug auf das Koordinatensystem des äußeren Referenzrahmens zu kalibrieren. Ein computererzeugtes virtuelles Bild erlaubt es dem Benutzer, den Merkmalssensors zuverlässig an der richtigen Position zu positionieren.

Ein erfindungsgemäßes Messplatzsystem zum Kalibrieren eines Referenzsystems, das zur Fahrzeugvermessung verwendet wird, hat wenigstens eine Kalibriervorrichtung, die mehrere Kalibriervorrichtungsbezugsmerkmale aufweist, einem Kalibrierrahmen mit wenigstens drei Auflagepunkten, die zur Aufnahme eines Referenzsystemträgers für das zu kalibrierende Referenzsystem ausgebildet sind und einem Referenzsystem mit wenigstens einer Kamera, das mit Hilfe des Referenzsystemträgers auf den Auflagepunkten des Kalibrierrahmens angeordnet ist wobei der Kalibrierrahmen wenigstens drei Kalibrierrahmen-Bezugsmerkmale aufweist und die Positionen der Auflagepunkte und der Kalibrierrahmen-Bezugsmerkmale in einem gemeinsamen Koordinatensystem bekannt sind und der Kalibrierrahmen so ausgebildet ist, dass die Kalibrierrahmen-Bezugsmerkmale und wenigstens eine Auswahl der Kalibriervorrichtungsbezugsmerkmale von der Kamera des Referenzsystems erfassbar ist.

Ein erfindungsgemäßes Verfahren zum Kalibrieren eines Referenzsystems zur Fahrzeugvermessung in einem erfindungsgemäßen Messplatzsystem umfasst die Schritte, die Koordinaten der Kalibriervorrichtungsbezugsmerkmale in einem Koordinatensystem des Messplatzsystems zu bestimmen, die Kalibriervorrichtung und den Kalibrierrahmen in das Messplatzsystem einzubringen, das Referenzsystem auf den Auflagepunkten des Kalibrierrahmens anzuordnen, die Kalibriervorrichtungsbezugsmerkmale und die Kalibrierrahmen-Bezugsmerkmale optisch mit der Kamera des Referenzsystems zu erfassen, und die Koordinaten der Auflagepunkte in Bezug auf die Kalibriervorrichtungsbezugsmerkmale im Koordinatensystem des Messplatzsystems zu bestimmen.

Da die relative Position der Auflagepunkte des Kalibrierrahmens in Bezug auf die Kalibrierrahmen-Bezugsmerkmale erfindungsgemäß bekannt ist, sind auch die Positionen der Auflagepunkte und damit auch die Position eines auf die Auflagepunkte aufgebrachten Referenzsystems in Bezug auf die Kalibriervorrichtungsbezugsmerkmale bekannt. Dies ermöglicht es, ein einzelnes Referenzsystem zu kalibieren. Es ist insbesondere nicht notwendig, zwei Referenzsysteme einander gegenüberliegend anzuordnen, wie es im Stand der Technik bekannt ist, um die Referenzierung durchzuführen.

In einer Ausführungsform liegen wenigstens drei der Kalibrierrahmen-Bezugsmerkmale nicht auf einer gemeinsamen Geraden. Ein Kalibrierrahmen, bei dem wenigstens drei Kalibrierrahmen-Bezugsmerkmale nicht auf einer gemeinsamen Geraden liegen, ermöglicht es, das Referenzsystem in allen drei Raumdimensionen exakt zu kalibrieren.

In einer Ausführungsform liegen wenigstens drei Kalibrierrahmen-Bezugsmerkmale nicht in einer gemeinsamen Ebene. In einer alternativen Ausführungsform liegen die drei Kalibrierrahmen-Bezugsmerkmale in einer gemeinsamen Ebene, aber nicht auf einer gemeinsamen Geraden.

Die Kalibrierung kann alternativ sowohl mit Kalibrierrahmen-Bezugsmerkmalen, die in einer gemeinsamen Ebene liegen, als auch mit Kalibrierrahmen-Bezugsmerkmalen, die nicht in einer gemeinsamen Ebene liegen, durchgeführt werden, solange die Kalibrierrahmen-Bezugsmerkmale nicht auf einer gemeinsamen Geraden angeordnet sind. Dies ermöglicht einen flexiblen Aufbau des Kalibrierrahmens und insbesondere eine flexible Positionierung der Kalibrierrahmen-Bezugsmerkmale auf dem Kalibrierrahmen.

In einer Ausführungsform sind die Kalibrierrahmen-Bezugsmerkmale und die Auflagepunkte an exakt vorgegebenen Positionen auf dem Kalibierrahmen angeordnet. Dies ermöglicht eine exakte Kalibrierung des Referenzsystems, ohne die Kalibrierrahmen-Bezugsmerkmale und Auflagepunkte zuvor mit einem Koordinatenmessgerät zu vermessen. Die Genauigkeit der Kalibrierung wird erhöht, da Fehler und Ungenauigkeiten bei der vorherigen Vermessung vermieden werden.

In einer Ausführungsform sind die Kalibrierrahmen-Bezugsmerkmale als Passmarken oder Passbohrungen ausgebildet. In einer Ausführungsform sind die Kalibrierrahmen-Bezugsmerkmale in Form von Passmarken in die Passbohrungen einsetzbar. Passmarken stellen optisch gut erfassbare Kalibrierrahmen-Bezugsmerkmale zur Verfügung. Passbohrungen stellen Kalibrierrahmen-Bezugsmerkmale zur Verfügung, die mit hoher Genauigkeit an vorgegebenen Positionen anordbar sind.

In einer Ausführungsform sind die Passmarken auf die Auflagepunkte adaptierbar. Passmarken stellen optisch gut erfassbare Kalibrierrahmen-Bezugsmerkmale zur Verfügung, die Auflagepunkte stellen gut reproduzierbare und einfach zu vermessende Koordinaten für die Kalibrierrahmen-Bezugsmerkmale zur Verfügung.

In einer Ausführungsform eines erfindungsgemäßen Verfahrens werden wenigstens drei Kalibrierrahmen-Bezugsmerkmale gleichzeitig mit den Bezugsmerkmalen der Kalibriervorrichtung optisch erfasst. Durch das gleichzeitige optische Erfassen der Kalibrierrahmen-Bezugsmerkmale und der Bezugsmerkmale der Kalibriervorrichtung kann das Verfahren besonders schnell und effizient durchgeführt werden.

Das Verfahren schließt ein, einen Referenzsystemträger mit wenigstens einem Bildaufnahmesystem und dem zu kalibrierenden Referenzsystem auf die Auflagepunkte des Kalibrierrahmens aufzubringen, um das Referenzsystem zu kalibrieren.

In einer Ausführungsform schließt das Verfahren ein, vor der optischen Erfassung Passmarken auf die Auflagepunkte für den Referenzsystemträger aufzubringen und die Passmarken nach der der Erfassung von den Auflagepunkten zu entfernen. Passmarken stellen optisch gut erkennbare Kalibrierrahmen-Bezugsmerkmale zur Verfügung.

Werden die Passmarken direkt auf die Auflagepunkte aufgebracht,sind die Positionen der Passmarken mit den Positionen der Auflagepunkte identisch, so dass auf eine Umrechnung der Positionen der als Kalibrierrahmen-Bezugsmerkmale dienenden Passmarken in die Positionen der Auflagepunkte verzichtet werden kann. Mit einer derartigen Umrechnung verbundene Fehler und Einbußen der Genauigkeit werden so zuverlässig vermieden.

In einer Ausführungsform eines erfindungsgemäßen Verfahrens sind die Positionen der Kalibrierrahmen-Bezugsmerkmale und der Auflagepunkte in einem gemeinsamen Koordinatensystem bekannt. In diesem Fall kann darauf verzichtet werden, die Koordinaten der Kalibrierrahmen-Bezugsmerkmale und der Auflagepunkte vor der eigentlichen Kalibrierung zu vermessen. Die Kalibrierung kann daher ohne Zeitverzögerung durchgeführt werden und Fehler, die sich auch aus einer ungenauen Vermessung der Koordinaten der Kalibrierrahmen-Bezugsmerkmale und der Auflagepunkte ergeben können, werden so zuverlässig vermieden.

In einer alternativen Ausführungsform werden die Koordinaten der Kalibrierrahmen-Bezugsmerkmale und der Auflagepunkte vor der Kalibrierung mit einem Koordinatenmessgerät vermessen. Nach einer exakten Vermessung der Koordinaten der Kalibrierrahmen-Bezugsmerkmale und der Auflagepunkte kann die Kalibrierung mit hoher Genauigkeit durchgeführt werden; insbesondere können Veränderungen der Koordinaten, wie sie z.B. aufgrund von Temperaturschwankungen auftreten, bei der Kalibrierung berücksichtigt werden.

Die Erfindung wird im Folgenden anhand der in den beigefügten Figuren gezeigten Ausführungsbeispiele näher erläutert. Dabei zeigt:
Figur 1 eine Draufsicht auf einen erfindungsgemäßen Kalibrierrahmen mit einem Referenzsystemträger;
Figur 2 eine Seitenansicht auf einen erfindungsgemäßen Kalibrierrahmen mit einem Referenzsystemträger;
Figur 3 eine schematische Draufsicht auf einen erfindungsgemäßen Kalibrierrahmen mit drei Kalibrierrahmen-Bezugsmerkmalen;
Figur 4 eine schematische Seitenansicht eines Ausschnitts eines erfindungsgemäßen Kalibrierrahmens;
Figur 5 eine Darstellung eines Messplatzsystem zum Kalibrieren eines Referenzsystems mit einer Kalibriervorrichtung, und
Figur 6 eine Darstellung eines Messplatzsystem zum Kalibrieren eines Referenzsystems mit einer Kalibriervorrichtung mit einen darin platzierten erfindungsgemäßen Kalibrierrahmen.

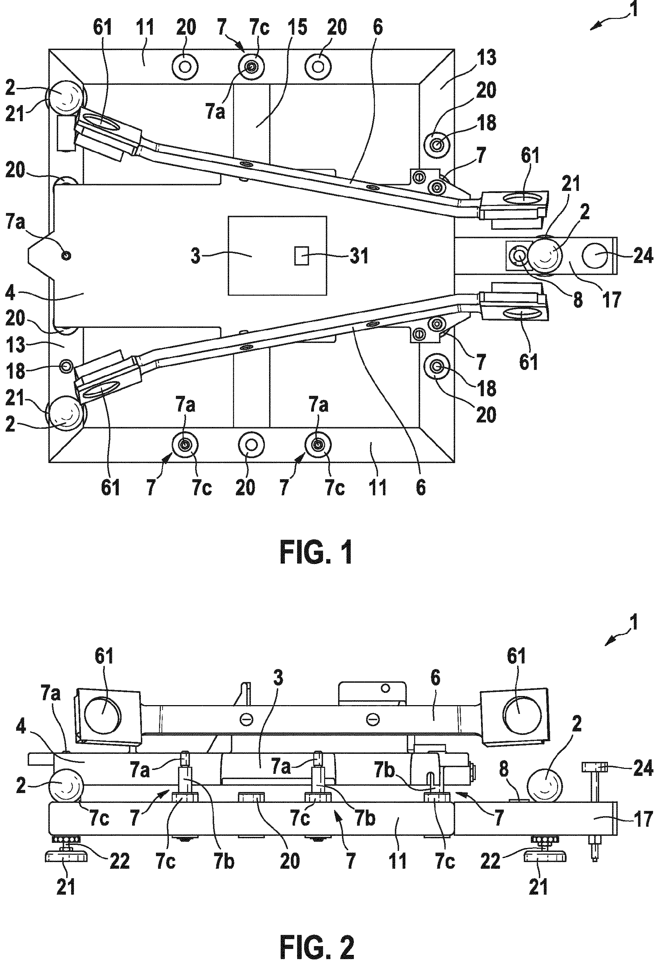

Figur 1 zeigt eine schematische Draufsicht auf einen erfindungsgemäßen Kalibrierrahmen 1, auf dem ein Referenzsystemträger 4 mit einem Referenzsystem 3 positioniert ist.

Der Kalibrierrahmen 1 ist in dem in der Figur 1 gezeigten Ausführungsbeispiel im Wesentlichen quadratisch mit zwei parallel zueinander verlaufenden ersten Trägern 11 und zwei in einem rechten Winkel zu den ersten Trägern 11 verlaufenden zweiten Trägern 13 ausgebildet. Ein dritter Träger 15 ist in der Mitte zwischen den beiden ersten Trägern 11 parallel zu den zweiten Trägern 13 angeordnet.

An einer Seite des von den ersten und zweiten Trägern 11, 13 gebildeten Quadrats ist ein vierter Träger 17 angebracht, der sich in einem rechten Winkel von der Mitte eines der zweiten Träger 13 parallel zu den ersten Trägern 11 nach außen erstreckt.

An dem vierten Träger 17 und demjenigen der zweiten Träger 13, an dem der vierte Träger 17 nicht angebracht ist, sind Füße 21 mit zugehörigen Einstellelementen 2 angebracht. Der vertikale Abstand zwischen den Füßen 21 und dem jeweiligen Träger 13, 17 ist durch Betätigen, z.B. Drehen, der Einstellelemente 2 variierbar. Die Einstellelemente 2 in Verbindung mit den zugehörigen Füßen 21 ermöglichen es, die von den Trägern 11, 13, 15 des Kalibrierrahmens 1 aufgespannte Ebene präzise im Raum auszurichten.

Die Füße 21 können magnetisch oder mit Saugnäpfen ausgebildet sein, um den Kalibrierrahmen 1 sicher aber lösbar auf einer Messeinrichtung befestigen zu können. An dem vierten Träger 17 ist zusätzlich ein Auswerfer 24 vorgesehen, der es ermöglicht, den Kalibrierrahmen 1 zu verkippen, um die Füße 21 von der Messeinrichtung zu lösen. Der Auswerfer 24 ist in einem größeren Abstand von dem zweiten Träger 13 als der Fuß 21 angebracht, so dass beim Lösen der Füße 21 durch Betätigen des Auswerfers 24 eine Hebelwirkung des Kalibrierrahmes 1 ausgenutzt werden kann.

Auf der dem Betrachter zugewandten Oberseite der Träger 11, 13 des Kalibrierrahmens 1 sind mehrere Aufnahme- bzw. Auflagepunkte 7 ausgebildet, die zur Aufnahme passender Auflagepunkte einer Referenzträgerplatte 4 ausgebildet sind.

In dem in der Figur 1 gezeigten Ausführungsbeispiel ist die Referenzträgerplatte 4 mit einem Referenzträgersystem 3 derart auf den Auflagepunkten 7 des Kalibrierrahmens 1 angeordnet, dass sich die im Wesentlichen rechteckige Referenzträgerplatte 4 mit ihrer Längsrichtung parallel zu den ersten Trägern 11 des Kalibrierrahmens 1 erstreckt. Auf der Referenzträgerplatte 4 sind neben einem Referenzsystem 3, das wenigstens einen Neigungsgeber 31 umfasst, zwei Kameraträger 6 mit jeweils zwei nach außen gerichteten Bildaufnahmevorrichtungen 61 angebracht.

Die Kameraträger 6 sind in dem in Figur 1 gezeigten Ausführungsbeispiel so angeordnet, dass die Kameras 61 auf der in der Figur 1 links gezeigten Seite einen größeren Abstand voneinander aufweisen als auf der in der Figur 1 rechts gezeigten Seite des Referenzsystemträgers 4, d.h. die Kameraträger 6 laufen von links nach rechts V-förmig aufeinander zu. Es sind aber auch andere Kameraanordnungen möglich.

Auf dem vierten Träger 17 ist zwischen dem Einstellelement 2 und dem zweiten Träger 13, mit dem der vierte Träger 17 verbunden ist, ein Nivellierelement 8 angeordnet, das ausgebildet ist, um die räumliche Ausrichtung der durch die drei Auflagepunkte 7 aufgespannten Ebene zu bestimmen. Das Nivellierelement 8 kann z.B. als Libelle (Wasserwaage) oder als elektronischer Neigungsgeber ausgebildet sein.

Mithilfe des Nivellierelements 8 ist die räumliche Ausrichtung der durch die drei Auflagepunkte 7 aufgespannten Ebene bei Bedarf exakt bestimmbar. Durch Betätigen der Einstellelemente 2 bei gleichzeitiger Überwachung der Anzeige bzw. Ausgabe des Nivellierelements 8 kann die räumliche Ausrichtung des Kalibrierrahmens 1 so mit hoher Genauigkeit eingestellt werden. Insbesondere kann der Kalibrierrahmen 1 so eingestellt werden, dass die durch die ersten, zweiten und dritten Träger 11, 13, 15 aufgespannte Ebene exakt in einem rechten Winkel zum Erdgravitationsfeld ausgerichtet ist. Ein Referenzsystem 3, das über die Trägerplatte 4 mittels der Auflagepunkte 7 auf dem Kalibrierrahmen 1 angeordnet ist, wobei der Kalibrierrahmen 1 exakt in einem rechten Winkel zum Erdgravitationsfeld ausgerichtet ist, ist mit hoher Genauigkeit kalibrierbar.

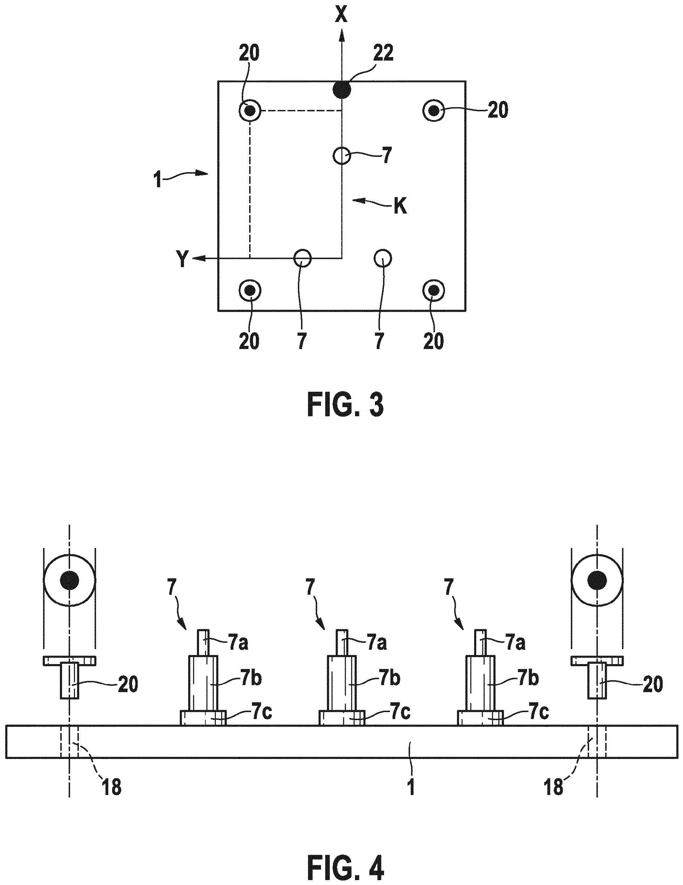

Auf den ersten und zweiten Trägern 11, 13 sind Passpunkte 20 und/oder Passbohrungen 18, die zur Aufnahme von Passpunkten 20 geeignet sind, ausgebildet. Die Funktion der Passpunkte 20 und -bohrungen 18 wird im Folgenden unter Bezugnahme auf die Figuren 3 und 4 beschrieben.

Figur 2 zeigt eine Seitenansicht des in der Figur 1 gezeigten Kalibrierrahmens 1.

Die verstellbaren Füße 21 mit den Einstellelementen 2 und der Auswerfer 24 sind in der Figur 2 gut erkennbar. Die Füße 21 sind insbesondere durch mit einem Außengewinde versehene Wellen 22 an den Trägern 11, 17 abgestützt. Durch Drehen der Einstellelemente 2 werden die Wellen 22 in Bohrungen, die in den Trägern 11, 17 ausgebildet und jeweils mit einem Innengewinde versehen sind, gedreht, so dass die an den Wellen 22 und in den Bohrungen ausgebildeten Gewinde eine Änderung des Abstandes zwischen den Füßen 21 und dem jeweiligen Träger 11, 17 bewirken. Die Bohrungen sind in der Figur 2 nicht erkennbar.

Die Auflagepunkte 7 sind pyramidenförmig ausgebildet und bestehen in dem in der Figur 2 gezeigten Ausführungsbeispiel aus drei in axialer Richtung übereinander angeordneten Zylindern 7a, 7b, 7c, wobei jeder Zylinder 7a, 7b einen geringeren Durchmesser als der jeweils unter ihm angeordnete Zylinder 7b, 7c hat. Die obersten Zylinder 7a sind derart ausgebildet, dass sie ohne Spiel in entsprechende (in der Figur 2 nicht sichtbare) Aufnahmeöffnungen, die in dem Referenzsystemträger 4 ausgebildet sind, einführbar sind. Der Referenzsystemträger 4 mit dem Referenzsystem 3 ist so durch Einführen der obersten Zylinder 7a der Auflagepunkte 7 in entsprechende Aufnahmeöffnungen des Referenzsystemträgers 4 spielfrei auf dem Kalibrierrahmen 1 abgestützt.

Vor einer Aufnahme einer Bildsequenz wird der Kalibrierrahmen 1 in eine Kalibriervorrichtung eingelegt und fest mit dieser verbunden, um ein unbeabsichtigtes Verschieben oder Verdrehen des Kalibrierrahmens 1 während der folgenden Messungen zu verhindern.

Ein Kalibrierrahmen 1, wie er in der Figur 3 gezeigt ist, weist wenigstens drei (in dem in der Figur 3 gezeigten Beispiel vier) Kalibrierrahmen-Bezugsmerkmale 20 auf, die von einer Bildaufnahmevorrichtung in einem ersten Schritt gemeinsam mit den Bezugsmerkmalen der Kalibriervorrichtung optisch erfasst werden. Die wenigstens drei Kalibrierrahmen-Bezugsmerkmale 20 dürfen in einer gemeinsamen Ebene, nicht aber auf einer gemeinsamen Geraden liegen.

Für die Kalibrierung müssen die Positionen der Kalibrierrahmen-Bezugsmerkmale 20 und der Auflagepunkte 7 in einem gemeinsamen Koordinatensystem bekannt sein. Sind die Positionen der Kalibrierrahmen-Bezugsmerkmale 20 und der Auflagepunkte 7 nicht bekannt, so sind die Kalibrierrahmen-Bezugsmerkmale 20 und die Auflagepunkte 7 vor der Kalibrierung, z.B. mit einem Koordinatenmessgerät, zu vermessen, um ihre Positionen (Koordinaten) zu bestimmen.

Figur 3 zeigt beispielhaft ein solches Koordinatensystem K, das durch die Auflagepunkte 7 für den Referenzsystemträger 4 vorgegeben wird. In diesem Koordinatensystem K müssen auch die Positionen der Kalibrierrahmen-Bezugsmerkmale 20 bekannt sein, wie es durch die gestrichelten Linien angedeutet ist. Das Koordinatensystem K definiert ein Messplatzkoordinatensystem.

Eine weitere Möglichkeit ist der Einsatz so genannter Passmarken 20 als Bezugsmerkmale. Bei der Herstellung des Kalibrierrahmens 1 werden so genannte Passbohrungen 18 in den Trägern 11, 13 des Kalibrierrahmens 1 ausgebildet. Die Positionen der Passbohrungen 18 und der Auflagepunkte 7 sind in einem gemeinsamen Koordinatensystem bekannt. Vor der Bilderfassung mit der Bildaufnahmevorrichtung werden optisch gut erfassbare Passmarken 20, die an ihrer der Bildaufnahmevorrichtung zugewandten Oberseite jeweils wenigstens ein optisch gut erfassbares Bezugsmerkmal (Zielpunkt) aufweisen, in die Passbohrungen 18 eingesetzt, wie schematisch in der Figur 4 gezeigt.

In einem alternativen Ausführungsbeispiel werden die Passmarken 20 direkt auf die Auflagepunkte 7 adaptiert. Nach der Bildaufnahme zur Erfassung der Kalibrierrahmen-Bezugsmerkmale 20 werden die Passmarken 20 dann entfernt und der Referenzsystemträger 4 mit dem Referenzsystem 3 und den Kameras 61 wird auf die Auflagepunkte 7 aufgebracht, um die Kalibrierung durchzuführen.

Die Koordinaten der Kalibrierrahmen-Bezugsmerkmale 20 werden entweder direkt im Ausgleichsprozess zur Bestimmung der Bezugsmerkmale der Kalibriervorrichtung verwendet, um das Messplatzkoordinatensystem K festzulegen, oder es erfolgt eine separate, dem Ausgleichsprozess nachgeordnete, Transformation in das Messplatzkoordinatensystem K. So ist gewährleistet, dass die Kameras 61 und das Referenzsystem 3 in einem gemeinsamen Messplatzkoordinatensystem K kalibriert werden.

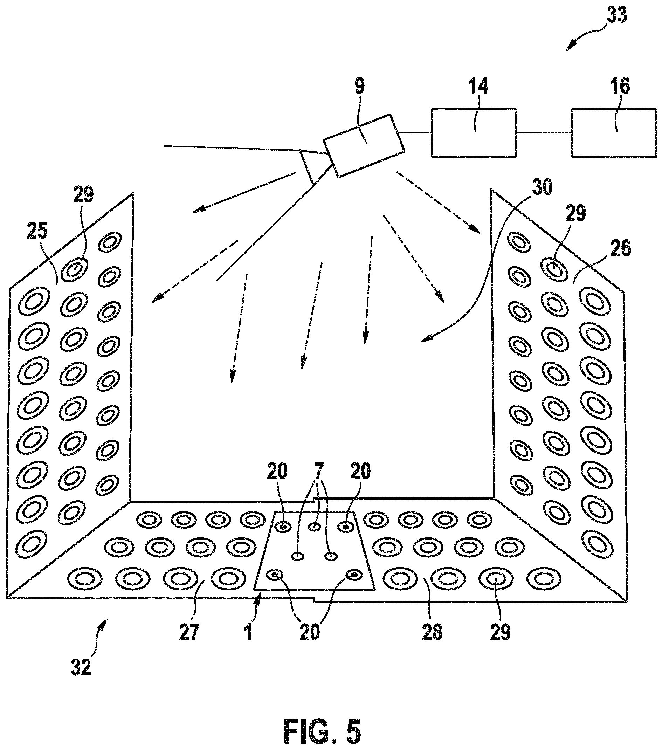

Figur 5 zeigt ein Ausführungsbeispiel eines erfindungsgemäßen Messplatzsystems 33.

Das Messplatzsystem 33 umfasst eine Kalibriervorrichtung 32 mit mehreren Bezugsmerkmalen 29 und mindestens eine Bildaufnahmevorrichtung 9 zur Bestimmung der 3D-Koordinaten der Bezugsmerkmale 29. Die mindestens eine Bildaufnahmevorrichtung 9 ist oberhalb der Kalibriervorrichtung 32 positioniert, so dass im Wesentlichen alle Bezugsmerkmale 29 der Kalibriervorrichtung 32 von der Bildaufnahmevorrichtung 9 aufgenommen werden können.

Die in der Figur 5 gezeigte Kalibriervorrichtung 32 hat vier ebene Platten 25, 26, 27, 28, die an ihren Rändern derart miteinander verbunden sind, dass sie einen U-förmigen Messrahmen bilden, der an drei Seiten (links, rechts und unten) einen Meßraum 30 begrenzt. Die Bezugsmerkmale 29 sind auf den dem Meßraum 30 zugewandten Seite der Platten 25, 26, 27, 28 angeordnet.

Die Platten 25, 26, 27, 28 können miteinander verlötet, verschweißt oder durch Steck- oder Schraubverbindungen miteinander verbunden sein. Zwei der Platten 25, 26, 27, 28 sind als Seitenplatten 25, 26 im Wesentlichen parallel zueinander angeordnet, wobei die beiden Oberflächen, auf denen die Bezugsmerkmalen 29 der Kalibriervorrichtung 32 ausgebildet sind, einander zugewandt sind. Zwei weitere Platten 27, 28 (Bodenplatten) sind nebeneinander in einer gemeinsamen Ebene miteinander verbunden und bilden eine Bodenfläche, die im Wesentlichen in einem rechten Winkel zur Ebene der beiden Seitenplatten 25, 26 ausgerichtet ist.

Anstelle der vier ebenen Platten 25, 26, 27, 28 kann der Messrahmen auch aus nur drei Platten zusammengesetzt sein, wobei die Bodenfläche von einer einzigen Bodenplatte gebildet wird. Alternativ kann der Messrahmen aus mehr als vier Platten zusammengesetzt sein, wobei einzelne oder mehrere der vier Platten 25, 26, 27, 28 in weitere Teilplatten zerlegt sind.

Die Bezugsmerkmale 29 der Kalibriervorrichtung 32 können als 2D-Flächen oder 3D-Körper mit bekannter Geometrie, wie z.B. der Geometrie eines Kreises, eines Dreiecks, eines Rechtecks, einer Kugel, eines Würfels, eines Quaders oder ähnlichem, ausgebildet sein, so dass sie, gegebenenfalls unter Ausnutzung besonderer Beleuchtungsverhältnisse, einen guten Kontrast zu ihrer Umgebung besitzen. Sie können insbesondere als reflektierende Merkmale ausgebildet sind. Derart ausgebildete Bezugsmerkmale 29 haben den Vorteil, dass sie besonders einfach in einem aufgenommenen Bild erkannt werden können und dass durch ihre bekannte Geometrie eine hohe Messgenauigkeit erreicht werden kann. Den Bezugsmerkmalen 29 kann eine Codierung zugeordnet sein, um ihre Identifikation zu vereinfachen.

Alternativ können auch ohnehin vorhandene, natürliche Merkmale der Platten 25, 26, 27, 28, z. B. Kanten oder zufällige Kontrastmuster, die sich aus einer Textur der Platten 25, 26, 27, 28 ergeben, als Bezugsmerkmale 29 der Kalibriervorrichtung 32 herangezogen werden. Auch eine Kombination von natürlichen und künstlichen Bezugsmerkmalen 29 ist möglich.
Weiterhin können geometrische Informationen der Bezugsmerkmale 29 der Kalibriervorrichtung 32 bekannt sein und bei der Auswertung verwendet werden, wie z.B. der Abstand zwischen den Bezugsmerkmalen 29 der Kalibriervorrichtung 32 oder die Koordinaten der Bezugsmerkmale 29 in einem lokalen 2D- oder 3D-Koordinatensystem zumindest eines Teils der Kalibriervorrichtung 32. Wenn solche Informationen vorhanden sind, werden diese Informationen bei der rechnerischen Auswertung insbesondere in einen Ausgleichungsprozess mit entsprechenden Toleranzen eingeführt.
Zum Kalibrieren eines Referenzsystems 3 werden in einem ersten Schritt die Bezugsmerkmale 29 der Kalibriervorrichtung 32 durch die mindestens eine Bildaufnahmevorrichtung 9 aufgenommen und ihre 3D-Koordinaten bestimmt. Die Bildaufnahmevorrichtung 9 ist mit einem flächenhaften Bildsensor ausgestattet und ist eine der Kameras 61 des Referenzsystems 3. Es können auch zwei Bildaufnahmevorrichtungen 9, z.B. zwei Kameras 61 des Referenzsystems 3 gleichzeitig zur Aufnahme eingesetzt werden. Die verwendete Bildaufnahmevorrichtung 9 ist mit einer Auswerteinheit 14 verbunden.
Die Kalibriervorrichtung 32 wird für die Dauer der Bestimmung der 3D-Koordinaten der Bezugsmerkmale 29 zweckmäßigerweise ortsfest aufgestellt. Sie wird dabei so platziert, dass die Bezugsmerkmale 29 der Kalibriervorrichtung 32 aus mindestens zwei Perspektiven aufgenommen werden können. Die Platten 25, 26, 27, 28 und damit die Bezugsmerkmale 29 der Kalibriervorrichtung 32 dürfen nicht bewegt werden, bis alle notwendigen bzw. einzustellenden Perspektiven erfasst worden sind und die anschließende Kalibrierung durchgeführt wurde.
Die Erfassung der Bezugsmerkmale 29 der Kalibriervorrichtung 32 erfolgt sequentiell, wobei eine Abfolge von Aufnahmen der Bezugsmerkmale 29 der Kalibriervorrichtung 32 von einem Ende zum anderen Ende der Kalibriervorrichtung 32 durch Änderung der Aufnahmerichtung bei fester Aufnahmeposition zweckmäßig ist. Die aufgenommenen Bilder müssen sich überlappen und mindestens vier gemeinsame Bezugsmerkmale 29 der Kalibriervorrichtung 32 aufweisen. Nachdem die Aufnahme aller benötigten Bilder aus einer Aufnahmeposition abgeschlossen ist, wird die Aufnahmeposition der Bildaufnahmevorrichtung 9 verändert und es werden erneut alle Bezugsmerkmale 29 der Kalibriervorrichtung 32 sequentiell aufgenommen.

Vorteilhaft kann der Einsatz von einem, in den Figuren nicht gezeigten, Hilfsadapter zum Halten und Ausrichten der Bildaufnahmevorrichtung 9 sein. Der Hilfsadapter gibt der Bildaufnahmevorrichtung 9 eine definierte Aufnahmeposition und Aufnahmerichtung vor, wodurch eine vom Bediener weitgehend unabhängige Genauigkeit gewährleistet wird.

Die Bildaufnahme kann kontinuierlich erfolgen. Die dabei entstehenden Bilddaten werden entweder vollständig ausgewertet oder von der Auswerteinheit 14 auf die zur Gewährleistung der gewünschten bzw. erforderlichen Genauigkeit notwendige Menge reduziert.

Der Bediener kann bei der Bildaufnahme unterstützt werden. Die aktuelle Aufnahmeposition und Aufnahmerichtung können, nachdem sie aus der Auswertung der von der Bildaufnahmevorrichtung 9 erfassten Bezugsmerkmale 29 der Kalibriervorrichtung 32 berechnet worden sind, auf einem Monitor 16, der mit der Auswerteinheit 14 verbunden ist, angezeigt werden.

Damit kann die Bedienperson sehr einfach die Bildaufnahmevorrichtung 9 auf die nächste geforderte Aufnahmeposition und Aufnahmerichtung einstellen, und die Auswerteinheit 14 kann die zur Gewährleistung der Genauigkeit notwendige Anzahl und Überdeckung der Aufnahmen einfordern. Auch kann von der Auswerteinheit 14 eine interaktive Bedienerführung und Überwachung bezüglich der richtigen Verwendung eines Hilfsadapters durchgeführt werden.

Die Auswertung der Bilder erfolgt beispielsweise nach einem statistischen Ausgleichsverfahren, da den Unbekannten in der Regel eine Vielzahl von Beobachtungen gegenüberstehen, die sich aus dem Netz der Bildaufnahmen ergeben. Die Positionen der Bezugsmerkmale 29 der Kalibriervorrichtung 32 in den Bildern bilden gemeinsam mit den Aufnahmepositionen und den Aufnahmerichtungen der Bildaufnahmevorrichtung 9 die Unbekannten in einem Gleichungssystem, die durch Überbestimmung in einem Ausgleichungsprozess bestimmt werden. Nachdem die 3D-Koordinaten der Bezugsmerkmale 29 der Kalibriervorrichtung 32 bestimmt worden sind, können einzelne Kriterien, wie z.B. Vollständigkeit und Abstand, auf Plausibilität geprüft werden. Auch die erreichte Genauigkeit der 3D-Koordinaten in Form von Standardabweichungen aus der Auswertung des überbestimmten Systems kann zur Prüfung herangezogen werden. Nur wenn alle Kriterien positiv überprüft worden sind, werden die 3D-Koordinaten der Bezugsmerkmale 29 für die Kalibrierung freigegeben. Dadurch wird die Korrektheit und Genauigkeit der Kalibrierung auch bei Anwendung durch einen NichtFachmann gewährleistet.

Nachdem im ersten Schritt die 3D-Koordinaten der Bezugsmerkmale 29 der Kalibriervorrichtung 32 bestimmt worden sind, wird in einem zweiten Schritt ein erfindungsgemäßer Kalibrierrahmen 1, der Auflagepunkte 7 und Kalibrierrahmen-Bezugsmerkmale 20 aufweist, im Messraum 30 angeordnet.

In der Figur 5 ist ein Ausführungsbeispiel gezeigt, bei dem ein erfindungsgemäßer Kalibrierrahmen 1 mit Auflagepunkten 7 mittig auf der Bodenfläche, die von den Platten 27 und 28 gebildet wird, positioniert worden ist.

Die an dem Kalibrierrahmen 1 angebrachten Kalibrierrahmen-Bezugsmerkmale 20 werden nach dem gleichen Verfahren wie zuvor die Bezugsmerkmale 29 der Kalibriervorrichtung 32 von der Bildaufnahmevorrichtung 9 optisch erfasst und ihre Positionen werden mit dem gleichen Verfahren bestimmt, mit dem die Positionen der Bezugsmerkmale 29 bestimmt worden sind.

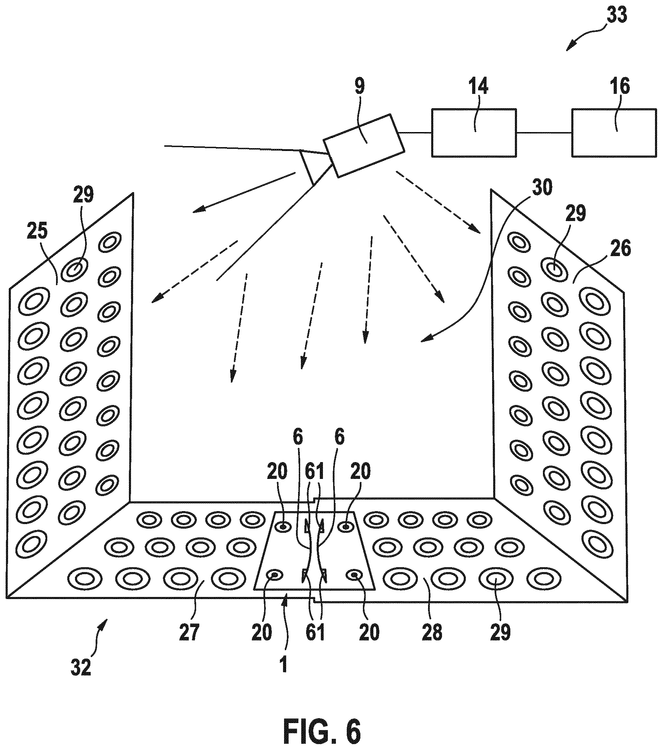

Fig 6 zeigt die Situation, nachdem ein Referenzsystem 3 auf den Auflagepunkten 7 des Kalibrierrahmens 1 angeordnet worden ist, wie es in den Figuren 1 und 2 gezeigt ist. Die Kameras 61 des Referenzsystems 3 sind dabei so ausgerichtet, dass sie jeweils eine Auswahl der Bezugsmerkmale 29 der Kalibriervorrichtung 32 erfassen.

Da die relative Position der Kalibrierrahmen-Bezugsmerkmale 20 und der Auflagepunkte 7 des Kalibrierrahmens 32 bekannt ist, sind auch die Positionen der Auflagepunkte 7 und eines auf die Auflagepunkte 7 aufgebrachten Referenzsystems 3 in Bezug auf die Bezugsmerkmale 29 der Kalibriervorrichtung 32 bekannt. Eine einzelnes Referenzsystem 3 kann so einfach und mit hoher Genauigkeit kalibriert werden, ohne dass auf ein zweites Referenzsystem 3 Bezug genommen werden muss.

## Patentansprüche

1. Messplatzsystem (33) zum Kalibrieren eines Referenzsystems (3) zur Fahrzeugvermessung mit
einer Kalibriervorrichtung (32), die mehrere Kalibriervorrichtungsbezugsmerkmale (29) aufweist;
einem Kalibrierrahmen (1) mit wenigstens drei Auflagepunkten (7), die zur Aufnahme eines Referenzsystemträgers (4) für das zu kalibrierende Referenzsystem (3) ausgebildet sind; und
einem Referenzsystem (3) mit wenigstens einer Kamera (61), das mit Hilfe des Referenzsystemträgers (4) auf den Auflagepunkten (7) des Kalibrierrahmens (1) angeordnet ist;
**dadurch gekennzeichnet, dass**
der Kalibrierrahmen (1) wenigstens drei Kalibrierrahmen-Bezugsmerkmale (20) aufweist und die Positionen der Auflagepunkte (7) und der Kalibrierrahmen-Bezugsmerkmale (20) in einem gemeinsamen Koordinatensystem (K) bekannt sind; und
der Kalibrierrahmen (1) so ausgebildet ist, dass die Kalibrierrahmen-Bezugsmerkmale (20) und wenigstens eine Auswahl der Kalibriervorrichtungsbezugsmerkmale (29) von der Kamera (61) des Referenzsystems (3) erfassbar ist.

2. Messplatzsystem (33) nach Anspruch 1, wobei wenigstens drei Auflagepunkte (7) des Kalibrierrahmens (1) nicht auf einer gemeinsamen Geraden liegen.

3. Messplatzsystem (33) nach Anspruch 1 oder 2, wobei wenigstens drei Kalibrierrahmen-Bezugsmerkmale (20) nicht auf einer gemeinsamen Geraden liegen.

4. Messplatzsystem (33) nach Anspruch 3, wobei wenigstens drei Kalibrierrahmen-Bezugsmerkmale (20) nicht in einer gemeinsamen Ebene liegen.

5. Messplatzsystem (33) nach einem der vorangehenden Ansprüche, wobei die Kalibrierrahmen-Bezugsmerkmale als Passmarken (20) und/oder Passbohrungen (18) ausgebildet sind.

6. Messplatzsystem (33) nach Anspruch 5, wobei die Kalibrierrahmen-Passmarken (20) in Passbohrungen (18) einsetzbar und/oder auf die Auflagepunkte (7) adaptierbar sind.

7. Verfahren zum Kalibrieren eines Referenzsystems (3) zur Fahrzeugvermessung in einem Messplatzsystem (33) nach einem der Ansprüche 1 bis 6, wobei das Verfahren die Schritte einschließt,
die Koordinaten der Kalibriervorrichtungsbezugsmerkmale (29) in einem Koordinatensystem des Messplatzsystems (33) zu bestimmen,
die Kalibriervorrichtung (32) und den Kalibrierrahmen (1) in das Messplatzsystem (33) einzubringen,
das Referenzsystem (3) auf den Auflagepunkten (7) des Kalibrierrahmens (1) anzuordnen,
die Kalibriervorrichtungsbezugsmerkmale (29) und die Kalibrierrahmen-Bezugsmerkmale (20) optisch mit der Kamera (61) des Referenzsystems (3) zu erfassen, und
die Koordinaten der Auflagepunkte (7) in Bezug auf die Kalibriervorrichtungsbezugsmerkmale (29) im Koordinatensystem (K) des Messplatzsystems (33) zu bestimmen.

8. Verfahren nach Anspruch 7, wobei das Verfahren einschließt, Passmarken (20) auf die Auflagepunkte (7) aufzubringen und die Passmarken (20) nach der optischen Erfassung von den Auflagepunkten (7) zu entfernen.

## Claims

1. A measuring station system (33) for calibrating a reference system (3) for vehicle measurement, comprising:
a calibration device (32) having multiple calibration device reference features (29);
a calibration frame (1) having at least three support points (7) configured for accommodating a reference system carrier (4) for the reference system (3) to be calibrated; and
a reference system (3) having at least one camera (61), which is arranged on the support points (7) of the calibration frame (1) with the aid of the reference system carrier (4);
**characterised in that**
the calibration frame (1) has at least three calibration frame reference features (20) and the positions of the support points (7) and of the calibration frame reference features (20) in a shared coordinate system (K) are known; and
the calibration frame (1) is configured such that the calibration frame reference features (20) and at least a selection of the calibration device reference features (29) are detectable by the camera (61) of the reference system (3).

2. The measuring station system (33) according to claim 1,
wherein at least three support points (7) of the calibration frame (1) are not situated on a shared straight line.

3. The measuring station system (33) according to claim 1 or 2,
wherein at least three calibration frame reference features (20) are not situated on a shared straight line.

4. The measuring station system (33) according to claim 3,
wherein at least three calibration frame reference features (20) are not situated in a shared plane.

5. The measuring station system (33) according to any of the preceding claims,
wherein the calibration frame reference features are configured as registration marks (20) and/or locating holes (18).

6. The measuring station system (33) according to claim 5,
wherein the calibration frame registration marks (20) are configured to be insertable into locating holes (18) and/or adaptable to the support points (7).

7. A method for calibrating a reference system (3) for vehicle measurement in a measuring station system (33) according to any of claims 1 to 6, said method comprising the steps of:
determining the coordinates of the calibration device reference features (29) in a coordinate system of the measuring station system (33),
introducing the calibration device (32) and the calibration frame (1) into the measuring station system (33),
positioning the reference system (3) on the support points (7) of the calibration frame (1),
optically detecting the calibration device reference features (29) and the calibration frame reference features (20) by means of the camera (61) of the reference system (3), and
determining the coordinates of the support points (7) with respect to the calibration device reference features (29) in the coordinate system (K) of the measuring station system (33).

8. The method according to claim 7,
wherein the method comprises applying registration marks (20) to the support points (7) and removing the registration marks (20) from the support points (7) after the optical detection.

## Revendications

1. Système de poste de mesure (33) pour le calibrage d'un système de référence (3) pour la mesure d'un véhicule, comprenant
un dispositif de calibrage (32) qui présente plusieurs caractéristiques de référence de dispositif de calibrage (29) ;
un cadre de calibrage (1) avec au moins trois points d'appui (7) constitués de manière à accueillir un support de système de référence (4) pour le système de référence à calibrer (3) ; et
un système de référence (3) doté d'au moins une caméra (61), qui est disposé sur les points d'appui (7) du cadre de calibrage (1) à l'aide du support de système de référence (4) ;
**caractérisé en ce que**
le cadre de calibrage (1) présente au moins trois caractéristiques de référence de cadre de calibrage (20) et les positions des points d'appui (7) et des caractéristiques de référence du cadre de calibrage (20) sont connues dans un système de coordonnées commun (K) ; et
le cadre de calibrage (1) est constitué de telle sorte que les caractéristiques de référence du cadre de calibrage (20) et au moins une sélection des caractéristiques de référence du dispositif de calibrage (29) peuvent être saisis par la caméra (61) du système de référence (3).

2. Système de poste de mesure (33) selon la revendication 1, dans lequel au moins trois points d'appui (7) du cadre de calibrage (1) ne se trouvent pas sur une même ligne droite.

3. Système de poste de mesure (33) selon la revendication 1 ou 2, dans lequel au moins trois caractéristiques de référence du cadre de calibrage (20) ne se trouvent pas sur une même ligne droite.

4. Système de poste de mesure (33) selon la revendication 3, dans lequel au moins trois caractéristiques de référence du cadre de calibrage (20) ne se trouvent pas à un même niveau.

5. Système de poste de mesure (33) selon l'une quelconque des revendications précédentes, dans lequel les caractéristiques de référence du cadre de calibrage sont constituées sous forme de repères (20) et/ou d'alésages (18).

6. Système de poste de mesure (33) selon la revendication 5, dans lequel les repères (20) du cadre de calibrage peuvent être insérés dans des alésages (18) et/ou adaptés sur les points d'appui (7).

7. Procédé pour le calibrage d'un système de référence (3) pour la mesure d'un véhicule dans un système de poste de mesure (33) selon l'une quelconque des revendications 1 à 6, ce procédé incluant les étapes suivantes :
déterminer les coordonnées des caractéristiques de référence du dispositif de calibrage (29) dans un système de coordonnées du système de poste de mesure (33),
introduire le dispositif de calibrage (32) et le cadre de calibrage (1) dans le système de poste de mesure (33),
disposer le système de référence (3) sur les points d'appui (7) du cadre de calibrage (1),
saisir les caractéristiques de référence du dispositif de calibrage (29) et les caractéristiques de référence du cadre de calibrage (20) sur le plan optique avec la caméra (61) du système de référence (3) et
déterminer les coordonnées des points d'appui (7) en rapport avec les caractéristiques de référence du dispositif de calibrage (29) dans le système de coordonnées (K) du système de poste de mesure (33).

8. Procédé selon la revendication 7, ce procédé incluant d'apposer des repères (20) sur les points d'appui (7) et de retirer ces repères (20) des points d'appui (7) après la saisie optique.
